# EUROPEAN PATENT SPECIFICATION

(11) **EP 1 837 617 B1**
(45) Date of publication and mention of the grant of the patent: **26.05.2010**
(21) Application number: 07104238.6
(22) Date of filing: 15.03.2007
(51) Int. Cl.: F28D 20/02, C09K 5/06

(54) **Process for manufacture of a latent heat storage body**
Prozess zur Hersstellung eines Latentwärmespeicherkörpers
Processus pour la fabrication d'un corps de stockage de chaleur latent

(30) Priority: 24.03.2006 US 388730
(43) Date of publication of application: 26.09.2007
(73) Proprietor: SGL Carbon SE, 65203 Wiesbaden (DE)
(72) Inventor: Christ, Martin, 86159 Augsburg (DE); Öttinger, Oswin, 86405 Meitingen (DE); Hudler, Bastian, 86641 Rain (DE); Wolber, Peter, 53859 Niederkassel (DE); Janoschek, Peter, 53179 Bonn (DE)
(74) Representative: Roßberg, Karin

(56) References cited:
- EP-A- 1 148 108
- EP-A- 1 156 097
- EP-A- 1 416 027
- EP-A- 1 598 406
- DE-A1- 19 630 073

## Description

### FIELD OF THE INVENTION

The invention relates to a process for the preparation of latent heat storage bodies by cold isostatic pressing of a mixture of expanded graphite material and a phase change material, and to latent heat storage bodies obtained by cold isostatic pressing of a mixture of expanded graphite material and a phase change material.

### BACKGROUND OF THE INVENTION

Phase change materials (PCM) are capable of storing heat energy in the form of latent heat. Such materials undergo a phase transition when heat is supplied or removed, for example, a transition from the solid to the liquid phase (melting) or from the liquid to the solid phase (solidification) or a transition between a low-temperature and high-temperature modification or a hydrated and a de-hydrated modification or between different liquid modifications. If heat is supplied to or removed from a phase change material, on reaching the phase transition point, the temperature remains constant until the material is completely transformed. The heat supplied or released during the phase transition, which causes no temperature change in the material, is known as latent heat.

The thermal conductivity of most phase change materials tends to be rather low. As a consequence, the charging and discharging of a latent heat storage device is a relatively slow process. This problem can be overcome by providing a latent heat storage composite wherein the phase change material is combined with an auxiliary component with high thermal conductivity, for example, graphite.

It is known in the art to configure mixtures of a phase change material and a heat-conducting additive like graphite into shaped bodies by techniques typically used in the field of plastics processing.

According to U.S. Publication No. 2002-033247, mixtures of phase change materials and auxiliaries like graphite can be compression molded into any desired shape. The molded bodies can be stored, transported and employed in a variety of ways. For example, the molded bodies can be inserted directly into electronic components.

U.S. Publication No. 2002-016505 discloses further methods to produce shaped bodies of mixtures of phase change materials and auxiliaries like graphite. The methods are referred to as compacting methods, such as pelletizing, roll compacting or extrusion. The shaped bodies may adopt any of a very wide variety of three-dimensional forms, such as a spherical form, a cube form or a rectangular block form.

Further shaping methods are disclosed in U.S. Publication No. 2004-084658. Powder mixtures of a phase change material and particles of expanded graphite material can be compacted, for example by shaping with a jolting molding machine (also referred to as jarram molding machine, vibro-molding machine or jolt ramming machine), and by pressing. Depending on the production process, these shaped bodies may have a highly anisotropic thermal conductivity property. This property should be taken into account in the application of the shaped body. The shaped body is preferably arranged in such a way that the high thermal conductivity direction of the shaped body is oriented toward the desired heat transfer, i.e. is oriented toward a heat exchanger profile or an object whose temperature is to be controlled. Furthermore, this U.S. Publication discloses injection-molding of a granulated compound of a phase change material and particles of expanded graphite material. The compound was prepared by admixing particles of the expanded graphite material into the molten phase-change material in a twin-screw extruder, and subsequent granulation of the mixture.

However shaping techniques originating from plastics processing usually involve a stage wherein the phase change material is heated to a temperature close to or above the melting point. This has several major drawbacks such as increased consumption of energy, need of special precaution when handling hot materials, corrosion of the process equipment and a large cycle time because of the time needed for heating and cooling.

On the other hand, by uniaxial cold pressing of powders comprising particles of a phase change material in the solid state and particles of expanded graphite material, due to the friction between the particles in the powder bed, block-shaped bodies with a poor edge quality are obtained. Poor edge quality in this context means that the block does not have sharp vertical edge faces. Instead, beads and disruptions are formed on the edges of the block.

### SUMMARY OF THE INVENTION

In one embodiment, the invention relates to a process for the preparation of shaped latent heat storage bodies by cold isostatic pressing of a mixture of particles of a phase change material and expanded graphite material. Within this context, cold isostatic pressing means isostatic pressing of powder mixtures of expanded graphite material and a phase change material at temperatures below the melting point of the phase change material.

In a further embodiment, the invention relates to latent heat storage bodies obtained by cold isostatic pressing of a mixture of particles of a phase change material and expanded graphite material.

Molding of powders by isostatic pressing is known in the art. The fundamental of this method is Pascal's law. According to this law, the pressure applied to a static liquid or gaseous medium spreads uniformly into all directions, and at the pressurized surfaces of the mold, the compressive force is proportional to the surface area. In contrast to the unidirectional action of pressure applied by uniaxial pressing, upon isostatic pressing, the work-piece is subjected to a pressure acting into all directions.

For cold isostatic pressing, the powder to be molded is disposed, for example, in an elastic mold made of rubber or plastics or metal that is pressure-tightly sealed. Before closure, the mold could be evacuated to avoid counter-pressure during isostatic pressing due to the air enclosed inside the mold. The filled and sealed mold is transferred into an isostatic pressing machine. After closing of the isostatic pressing machine, the isostatic pressing machine with a pressurizing medium pressurized to the target pressure (in the range of between 100 and 600 MPa), effecting compaction of the powder. The target pressure can be held for a predetermined interval of time. During subsequent decompression, the pressurized work-piece (the shaped latent heat storage body) is relaxed. Pressurizing is achieved by a compressed-air pump, piston pump or a hydraulic air pressure intensifier. For highly compressible powders with air trapped between the powder particles, pressurizing and decompression should be performed relatively slowly in order to avoid build up of pressure inside the work-piece resulting in formation of cracks.

It has been found that by cold isostatic pressing of mixtures of particles of a phase change material and expanded graphite material shaped latent heat storage bodies with an excellent edge quality can be obtained. The shaped bodies can be finished by sawing, milling and the like, and even through-holes can be drilled therethrough, if necessary.

Due to the all-sided pressurizing, the anisotropy of the thermal conductivity of latent heat storage bodies obtained by isostatic pressing tends to be less pronounced than with latent heat storage bodies of the same composition prepared by uniaxial pressing. Reduced thermal anisotropy of the latent heat storage material leads to less restrictions in the design of latent heat storage devices, as the orientation of the latent heat storage material with respect to the heat exchanger surfaces has lower influence on the thermal power output of the latent heat storage device.

Upon isostatic pressing at a temperature below the melting point of the phase change material, the large heat of fusion (melting) of the phase change material has not been spent, thus simplifying the process and reducing the process costs. Furthermore, the danger connected with handling of hot phase change material is avoided, and the processing equipment is not exposed to corrosive conditions.

Other features, details and advantages will be best understood from the following detailed description including examples.

### BRIEF DESCRIPTION OF THE FIGURES

FIG. 1 schematically illustrates an embodiment of a method of forming a latent heat storage body in accordance with the present invention.

FIG. 2 illustrates in-plane and through-plane thermal conductivity of a shaped latent heated body in accordance with an embodiment of the present invention.

### DETAILED DESCRIPTION

Processes for the production of expanded graphite material are known from, for example, sources such as U.S. Patent No. 3,404,061. The starting material is flaky natural graphite or synthetic graphite. The graphite flakes of the starting material are treated with a solution of an intercalating agent which include, but is not limited to, a mixture of concentrated sulfuric acid and nitric acid, fuming nitric acid or a mixture of hydrogen peroxide and concentrated sulfuric acid, resulting in the formation of a graphite salt or a similar graphite intercalation compound. Further intercalation agents are known in the art. U.S. Patent No. 6,645,456 discloses an intercalation mixture formed of at least one strong concentrated acid selected from the group consisting of sulfuric acid and nitric acid, an oxidizing agent selected from the group consisting of concentrated nitric acid, hydrogen peroxide and peroxo sulfuric acid for oxidizing the graphite, and a thermal polyphosphoric acid. The graphite-intercalation compounds or graphite salts, for example, graphite hydrogen sulfate or graphite nitrate, are heated in a shock-like manner. Upon heating, the volume of the graphite significantly increases. The obtained expanded graphite material comprises concertina-shaped bulky aggregates.
According to one embodiment of the invention, expanded graphite material comprising expanded graphite particles of a bulk density of between 2 and 200 grams per liter is added to a phase change material, and the obtained mixture is configured into a shaped body by cold isostatic pressing. However, the concertina-shaped bulky aggregates of the expanded graphite material are difficult to handle and tend to not easily mix with the phase change material.

Thus, according to a further embodiment, the expanded graphite particles prepared by the expansion process described above can be compressed into a planar foil-like web that is cut (shredded) into fragments resulting in particles having an average diameter between 5 microns (µm) and 20 millimeters (mm), preferably between 50 µm and 5 mm. The particles are readily mixed with the phase change material. Shredding of the graphite foil can be done in a cutting mill, a jet mill or other suitable mill.

It is appreciated that the embodiments described above may be combined by adding both particles of expanded graphite material and particles obtained by shredding a planar web formed by compression of expanded graphite material to the phase change material.

According to a further embodiment, non-expanded particles of natural and synthetic graphite are added to the expanded graphite material and/or particles of a planar web formed by compression of expanded graphite material so that the weight fraction of the non-expanded particles in the overall weight of the graphite material is at most 70 percent (%).

In one embodiment of the invention, any phase change material that is in a solid state at a temperature of cold isostatic pressing can be used. Typically, cold isostatic pressing is performed at room temperature (RT), approximately 20 degrees Celsius to 25 degrees Celsius. However, in a further embodiment, the pressurizing medium is cooled, thus allowing isostatic pressing of a mixture containing a phase change material with a melting point below RT. Examples of such phase change materials are, among others, zinc chloride trihydrate (ZnCl₂·3H₂O, melting point, 10 °C) and lithium chlorate trihydrate (LiClO₃·3H₂O, melting point 8 °C).

Suitable phase change materials are, for example, paraffins, sugar alcohols, polymers, in particular thermoplastic polymers, water, organic acids like fatty acids or other organic acids like capric acid, lauric acid, myristic acid, palmitic acid and stearic acid and their mixtures, aqueous solutions of salts, salt hydrates, mixtures of salt hydrates, inorganic and organic salts and eutectic blends of salts, clathrate hydrates and alkali metal hydroxides. Typical examples for polymers suitable as phase change materials are polyethylene, polypropylene, polyamides, polycarbonates, polyimides, poly(butadiene), poly(isoprene), poly(hydrogenated butadiene), polyetherester elastomers, ethylene/propylene/diene (EPDM) polystyrene and polyvinyl chloride. Examples for salts and salt hydrates suitable as phase change materials include ammonium and alkali and alkaline earth metal salts like chlorides, chlorates, nitrates, nitrides, sulfides, phosphates, hydroxides, carbonates, fluorides, bromides, acetates, acetamides and perborates of magnesium, sodium, potassium, calcium, lithium, barium and their hydrates. Typical representatives of salts and salt hydrates suitable as phase change materials are for example potassium nitrate, sodium nitrate, lithium nitrate, sodium chloride, calcium chloride, lithium chlorate, and their mixtures or calcium chloride hexahydrate, magnesium chloride hexahydrate, lithium nitrate trihydrate and sodium acetate trihydrate. Representatives of sugar alcohols are, for example, pentaerythritol, trimethylolethane, erythritol, mannitol, neopentyl glycol and their mixtures. It is appreciated that this identification of phase change materials is intended to be representative of such materials and not restrictive.

For ease of handling, it is expedient to provide the phase change material as particles with an average diameter between 0.01 and 10 millimeters for the mixing process. This particle size range, however, is not restrictive with respect to any embodiment of the invention.

Mixing of the particles of the phase change material and the (i) particles of expanded graphite material and/or (ii) particles obtained by shredding a planar web formed by compression of expanded graphite material and optionally (iii) particles of non-expanded natural and synthetic graphite is carried out using standard mixing equipment known in the art. Any type of mixer or kneader can be used. There are no restrictions with respect to the applied shear forces.

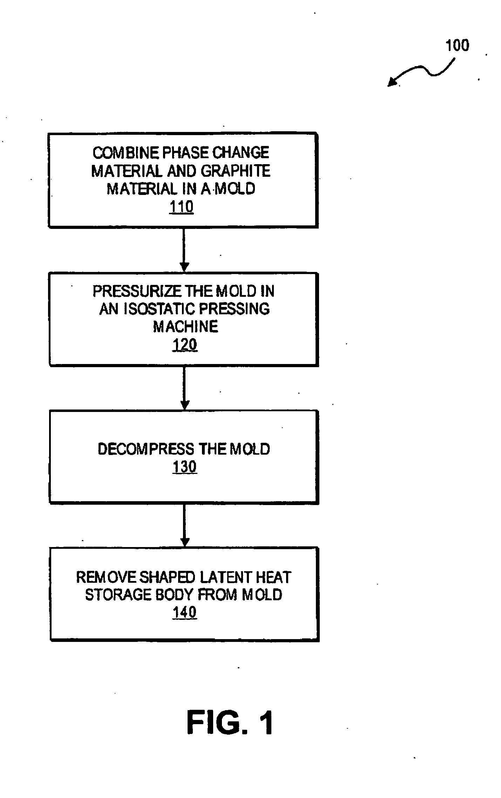

Referring to Figure 1 to form shaped bodies by cold isostatic pressing, the mixture of particles of a phase change material and (i) particles of expanded graphite material and/or (ii) particles obtained by shredding a planar web formed by compression of expanded graphite material, and optionally (iii) particles of non-expanded natural and synthetic graphite are deposited in an elastic mold (block 110). In one embodiment, the mold is made of rubber or plastic and supported by an outer mold made of perforated metal plates. Before pressurizing, the mold is sealed by a tight-fit cap made of rubber. The filled and sealed mold is transferred into a pressure chamber of an isostatic pressing machine (block 120). In one embodiment, an emulsion of oil in water is used as a pressurizing medium. Other static liquid or gaseous media may be substituted. After closing the pressure chamber, pressure is built up during a period of approximately 10 minutes until the target pressure (in the range of approximately 140 to 200 MPa) is reached. The target pressure is not held. Subsequent decompression is achieved within approximately 30 minutes (block130). After decompression, the mold is taken out of the isostatic pressing machine and the outer mold is opened and removed (block 140). A shaped body, i.e., a latent heat storage body, is removed from the rubber or plastic mold by a suitable handling tool.

The volume fraction of expanded graphite material in the mixture and, accordingly, in the latent heat storage body should be at least 2 % by volume. Below this limit, the number of graphite particles tends to be too small to form a continuous network of heat-conducting paths throughout the latent heat storage body. On the other hand, the volume fraction of expanded graphite material should not exceed 30%. Otherwise, the volumetric energy density of the latent heat storage body would be rather limited, since the volume fraction occupied by graphite does not contribute to the latent heat storage.

In those embodiments where the graphite fraction of the latent heat storage body contains particles of non-expanded graphite material, the volume fraction of the (i) particles of expanded graphite material and/or and (ii) particles obtained by shredding a planar web formed by compression of expanded graphite material in the mixture and, accordingly, in the latent heat storage body should be at least 2% in order to facilitate formation of a thermally conductive network. The overall volume fraction of all kinds of graphite should not exceed 30%.

The size and shape of the latent heat storage bodies depend on the intended use and the available isostatic pressing equipment. For example, the latent heat storage bodies may be of block-like, cubic or cylindrical shape. With state-of-the-art equipment for isostatic pressing, bodies with a height of up to 1,000 millimeters (mm) and a diameter of up to 1,000 millimeters can be manufactured. For ease of handling, latent heat storage bodies with smaller dimensions might be preferable, for example cylindrical bodies with a diameter of 300 mm and a height of 1,000 mm.

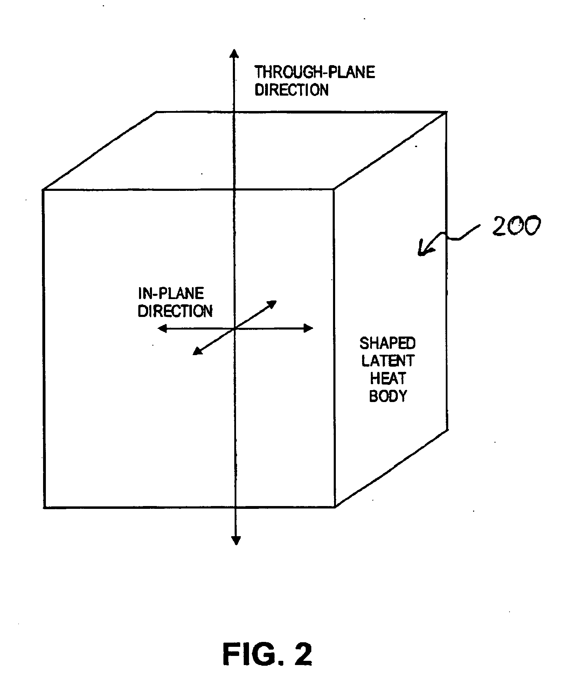

Figure 2 shows a schematic representation of a shaped latent heat body. In contrast to latent heat storage bodies prepared by uniaxial compression of a mixture of particles of a phase change material and expanded graphite material, the bodies obtained by isostatic pressing in accordance with embodiments of methods of the present invention are distinguished by a significantly lower anisotropy of the thermal conductivity. The anisotropy factor, i.e., the ratio between in-plane and through-plane thermal conductivity is less than 3.5, and preferably 2 or less. Referring to shaped latent heat body 200 in Figure 2, within this context, in-plane means the horizontal direction of the mold during the filling process for the isostatic compression and through-plane designates the direction perpendicular to the in-plane direction (see Figure 2).

Furthermore, by isostatic pressing, latent heat storage bodies with a higher density and lower porosity may be obtained as compared to those manufactured by uniaxial pressing, thus yielding a higher heat storage density and a lower heat storage volume for a given heat storage capacity.

The latent heat storage bodies can be used, for example, for air conditioning of rooms, buildings, vehicles, ships and yachts. Furthermore, they can be used to maintain a desired temperature during transport of heat sensitive goods, like food and medical goods. Other applications relate to storage of process heat especially in industrial or solar applications (food industry, textile industry), heat storage for steam generation, in particular process steam generation or steam generation for sterilization of medical equipment. Another application is cooling of electronic components. It is appreciated that this identification of possible applications is intended to be representative of such applications and not restrictive.

Although the invention is described herein as embodied in a process for the preparation of latent heat storage bodies, the latent heat bodies prepared by this process and applications for using the latent heat storage bodies, it is nevertheless not intended to be limited to the details given, since various modifications and structural changes may be made therein without departing from the spirit of the invention and within the scope and range of equivalents of the claims.

### EXAMPLE 1

A powder of the eutectic mixture of the salts potassium nitrate (KN0₃) and (NaN0₃) (80 % by weight) and expanded graphite material (20 % by weight) was prepared. The weight fractions of both, the eutectic salt mixture and expanded graphite material, are approximately equal to their volume fractions, because their densities are nearly equal (the density of the expanded graphite material is 2.20 g/cm³, and the density of the eutectic salt mixture is 2.18 g/cm³).

The expanded graphite material was obtained by compression of expanded graphite particles prepared by the expansion process described above into a planar foil-like web, and shredding the foil-like web into fragments resulting in particles. The mean particle size (dso value) of the salt powder was about 1 mm, the mean particle size (dso value) of the expanded graphite material was 0.5 mm. After dry mixing of the powders, the material was pressed uniaxially and isostatically, respectively.

For isostatic pressing, the powder mixture was filled into a plastic mold that was pressure-tightly sealed. The sealed mold was transferred to an isostatic pressing machine and the pressure was raised to a target pressure of 150 MPa using a water-oil emulsion as pressurizing medium. The isostatic pressure was released to ambient pressure within about 30 minutes. Afterwards, the compressed body (dimensions about 80 x 160 x 180 mm³) was removed from the mold.

For uniaxial compression, the powder mixture was disposed in a steel mold (dimensions about 200 x 200 x 50 mm³). The mold was closed with a steel plunger and pressurized by applying a pressure of about 30 MPa for 15 minutes. After opening of the mold the compressed body was removed.

In its central part, the block obtained by uniaxial compression was well compacted in its center. The edge quality of the block, however, was poor, as the edges showed disruptions. In contrast, the block obtained by isostatic pressing a mixture of the same composition was compressed homogeneously without disruptions.

### EXAMPLE 2

For comparison of the thermal conductivity of isostatically pressed bodies of a mixture of a phase change material and expanded graphite material and uniaxially pressed bodies of the same composition, block-shaped samples with comparable thermal in-plane conductivity were prepared by both manufacturing processes according to the procedure described in Example 1.

To determine the anisotropy, the thermal conductivity of both samples was measured in two directions, in-plane and through-plane. Within this context, in-plane means in horizontal direction of the mold during the filling process for the isostatically pressed sample, and perpendicular to the compressive force for the uniaxially compressed sample Through-plane designates the direction perpendicular to the in-plane direction. To characterize the anisotropy of the thermal conductivity, the anisotropy factor is calculated from the ratio of in-plane and through-plane thermal conductivity. Furthermore density and porosity of the bodies were determined. The data of both samples are compiled in table 1.

**Table 1: Comparison of latent heat storage bodies obtained by isostatic and uniaxial pressing,**

| *property* | *isostatically* | *uniaxially* |
|---|---|---|
| in-plane thermal conductivity [W/(m.K)] | 14 | 15 |
| through-plane thermal conductivity [W/(m.K)] | 7 | 4 |
| anisotropy factor | 2 | 3.75 |
| density [g/cm³] | 2.0 | 1.75 |
| porosity [% by volume] | 7 | 18 |

## Claims

1. A process comprising:
isostatic pressing of a mixture of a phase change material and an expanded graphite material into a shaped body at a temperature below the melting point of the phase change material.

2. The process of claim 1, wherein the expanded graphite material comprises expanded graphite particles with a bulk density between 2 and 200 grams per liter or particles prepared by cutting a planar foil-like web obtained by compression of expanded graphite particles into fragments having an average diameter between 5 microns and 20 millimeters or a combination of both kinds of particles.

3. The process of claim 1, wherein a non-expanded graphite material is added to the expanded graphite material so that the weight fraction of the non-expanded graphite in the graphite material is less than or equal to 70 percent.

4. The process of claim 1, wherein the phase change material is one of the group comprising paraffins, sugar alcohols, polymers, water, organic acids, mixtures of organic acids, aqueous solutions of salts, salt hydrates, mixtures of salt hydrates, inorganic salts, organic salts, eutectic blends of salts, clathrate hydrates and alkali metal hydroxides.

5. The process of claim 1, wherein a volume fraction of the expanded graphite material in the mixture of the phase change material and the expanded graphite material is at least 2 percent.

6. The process of claim 3, wherein a volume fraction of expanded graphite material in the mixture comprising the expanded graphite material, the non-expanded graphite material and the phase change material is at least 2 percent.

7. The process of claim 1, wherein the temperature at which isostatic pressing is performed is between approximately 20 to 25 degrees Celsius.

8. The process of claim 1, wherein isostatic pressing is performed with a pressurizing medium cooled to a temperature below a melting point of the phase change material.

9. The process of claim 1, wherein isostatic pressing comprises (a) building up of a target pressure between 140 and 200 Megapascals within 10 minutes and (b) decompression within 30 minutes

10. The process of claim 1, further comprising finishing the shaped body by a technique selected from the group consisting of sawing, milling and drilling.

11. A latent heat storage body produced by a process according to one or more of claims 1 to 10, the latent heat storage body comprising:
a mixture of a phase change material and an expanded graphite material wherein the anisotropy factor obtained from the ratio between in-plane and through-plane thermal conductivity is less than or equal to 3.5.

12. The latent heat storage body of claim 11, wherein the expanded graphite material comprises expanded graphite particles with a bulk density between 2 and 200 grams per liter.
or particles prepared by cutting a planar foil-like web obtained by compression of expanded graphite particles into fragments having an average diameter between 5 microns and 20 millimeters or a combination of both kinds of particles.

13. The latent heat storage body of claim 11, wherein a non-expanded graphite material is added to the expanded graphite material so that the weight fraction of the non-expanded graphite in the graphite material is less than or equal to 70 percent.

14. The latent heat storage body of claim 11, wherein the phase change material is one of the group comprising paraffins, sugar alcohols, polymers, water, organic acids and their mixtures, aqueous solutions of salts, salt hydrates, mixtures of salt hydrates, inorganic and organic salts and eutectic blends of salts, clathrate hydrates and alkali metal hydroxides.

15. The latent heat storage body of claim 11, wherein a volume fraction of the expanded graphite material in the latent heat storage body is at least 2 percent.

16. The latent heat storage body of claim 13, wherein a volume fraction of the expanded graphite material in the latent heat storage body comprising a mixture the expanded graphite material, the non-expanded graphite particles and the phase change material is at least 2 percent.

## Patentansprüche

1. Verfahren, welches das Folgende umfasst:
Isostatisches Pressen eines Gemisches aus einem Phasenwechselmaterial und einem Blähgraphitmaterial zu einem Formkörper bei einer Temperatur unterhalb des Schmelzpunktes des Phasenwechselmaterials.

2. Verfahren nach Anspruch 1, wobei das Blähgraphitmaterial Blähgraphitteilchen einer Schüttdichte von 2 bis 200 Gramm je Liter umfasst oder Teilchen umfasst, welche durch Schneiden einer ebenen folienartigen Bahn, die durch Kompression von Blähgraphitteilchen erhalten wird, zu Stücken eines mittleren Durchmessers von 5 Mikrometer bis 20 Millimeter hergestellt werden, oder eine Kombination aus beiden Teilchenarten umfasst.

3. Verfahren nach Anspruch 1, wobei ein Nicht-Blähgraphit-Graphitmaterial zu dem Blähgraphitmaterial hinzugegeben wird, derart, dass der Gewichtsanteil des Nicht-Blähgraphit-Graphits in dem Graphitmaterial nicht mehr als 70 Prozent beträgt.

4. Verfahren nach Anspruch 1, wobei es sich bei dem Phasenwechselmaterial um eines aus der Gruppe handelt, die Paraffine, Zuckeralkohole, Polymere, Wasser, organische Säuren, Mischungen organischer Säuren, wässrige Salzlösungen, Salzhydrate, Mischungen von Salzhydraten, anorganische Salze, organische Salze, eutektische Salzgemische, Clathrathydrate und Alkalimetallhydroxide umfasst.

5. Verfahren nach Anspruch 1, wobei ein Volumenanteil des Blähgraphitmaterials in dem Gemisch aus dem Phasenwechselmaterial und dem Blähgraphitmaterial mindestens 2 Prozent beträgt.

6. Verfahren nach Anspruch 3, wobei ein Volumenanteil des Blähgraphitmaterials in dem Gemisch, welches das Blähgraphitmaterial, das Nicht-Blähgraphit-Graphitmaterial und das Phasenwechselmaterial umfasst, mindestens 2 Prozent beträgt.

7. Verfahren nach Anspruch 1, wobei die Temperatur, bei welcher das isostatische Pressen durchgeführt wird, ungefähr 20 bis 25 °C beträgt.

8. Verfahren nach Anspruch 1, wobei das isostatische Pressen mit einem Pressmedium durchgeführt wird, welches auf eine Temperatur unterhalb des Schmelzpunktes des Phasenwechselmaterials gekühlt wird.

9. Verfahren nach Anspruch 1, wobei das isostatische Pressen (a) den Aufbau eines Zieldrucks von 140 bis 200 Megapascal innerhalb von 10 Minuten und (b) eine Dekompression innerhalb von 30 Minuten umfasst.

10. Verfahren nach Anspruch 1, welches ferner das Fertigstellen des Formkörpers über eine Technik umfasst, die aus der Gruppe ausgewählt wird, die aus Sägen, Fräsen und Bohren besteht.

11. Speicherkörper für latente Wärme, welcher über ein Verfahren nach einem oder mehreren der Ansprüche 1 bis 10 hergestellt wird, wobei der Speicherkörper für latente Wärme das Folgende umfasst:
ein Gemisch aus einem Phasenwechselmaterial und einem Blähgraphitmaterial, wobei der Anisotropiefaktor, welcher aus dem Verhältnis der Wärmeleitfähigkeit in einer Ebene zu derjenigen durch die Ebene hindurch erhalten wird, nicht größer als 3,5 ist.

12. Speicherkörper für latente Wärme nach Anspruch 11, wobei das Blähgraphitmaterial Blähgraphitteilchen einer Schüttdichte von 2 bis 200 Gramm je Liter umfasst oder Teilchen umfasst, welche durch Schneiden einer ebenen folienartigen Bahn, die durch Kompression von Blähgraphitteilchen erhalten wird, zu Stücken eines mittleren Durchmessers von 5 Mikrometer bis 20 Millimeter hergestellt werden, oder eine Kombination aus beiden Teilchenarten umfasst.

13. Speicherkörper für latente Wärme nach Anspruch 11, wobei ein Nicht-Blähgraphit-Graphitmaterial zu dem Blähgraphitmaterial hinzugegeben wird, derart, dass der Gewichtsanteil des Nicht-Blähgraphit-Graphits in dem Graphitmaterial nicht mehr als 70 Prozent beträgt.

14. Speicherkörper für latente Wärme nach Anspruch 11, wobei es sich bei dem Phasenwechselmaterial um eines aus der Gruppe handelt, die Paraffine, Zuckeralkohole, Polymere, Wasser, organische Säuren und Mischungen dieser, wässrige Salzlösungen, Salzhydrate, Mischungen von Salzhydraten, anorganische und organische Salze und eutektische Salzgemische, Clathrathydrate und Alkalimetallhydroxide umfasst.

15. Speicherkörper für latente Wärme nach Anspruch 11, wobei ein Volumenanteil des Blähgraphitmaterials in dem Speicherkörper für latente Wärme mindestens 2 Prozent beträgt.

16. Speicherkörper für latente Wärme nach Anspruch 13, wobei ein Volumenanteil des Blähgraphitmaterials in dem Speicherkörper für latente Wärme, welcher ein Gemisch aus dem Blähgraphitmaterial, dem Nicht-Blähgraphit-Graphitmaterial und dem Phasenwechselmaterial umfasst, mindestens 2 Prozent beträgt.

## Revendications

1. Procédé comprenant :
la compression isostatique d'un mélange d'un matériau à changement de phase et d'un matériau de graphite expansé en un corps façonné à une température inférieure au point de fusion du matériau à changement de phase.

2. Procédé selon la revendication 1, dans lequel le matériau de graphite expansé comprend des particules de graphite expansées avec une densité apparente comprise entre 2 et 200 grammes par litre ou des particules préparées par découpe d'une bande de type feuille plane obtenue par compression de particules de graphite expansées en fragments ayant un diamètre moyen compris entre 5 microns et 20 millimètres ou une combinaison des deux sortes de particules.

3. Procédé selon la revendication 1, dans lequel un matériau de graphite non expansé est ajouté au matériau de graphite expansé de manière à ce que la fraction en poids du matériau de graphite non expansé dans le matériau de graphite soit inférieure ou égale à 70 %.

4. Procédé selon la revendication 1, dans lequel le matériau à changement de phase est l'un du groupe comprenant les paraffines, les polyols, les polymères, l'eau, les acides organiques, les mélanges d'acides organiques, les solutions aqueuses de sels, les hydrates de sels, les mélanges d'hydrates de sels, les sels inorganiques, les sels organiques, les mélanges eutectiques de sels, les hydrates de clathrates et les hydroxydes de métaux alcalins.

5. Procédé selon la revendication 1, dans lequel une fraction volumique du matériau de graphite expansé dans le mélange du matériau à changement de phase et du matériau de graphite expansé est d'au moins 2 %.

6. Procédé selon la revendication 3, dans lequel une fraction volumique du matériau de graphite expansé dans le mélange comprenant le matériau de graphite expansé, le matériau de graphite non expansé et le matériau à changement de phase est d'au moins 2 %.

7. Procédé selon la revendication 1, dans lequel la température à laquelle la compression isostatique est réalisée est comprise entre approximativement 20 et 25 degrés Celsius.

8. Procédé selon la revendication 1, dans lequel la compression isostatique est réalisée avec un milieu de pressurisation refroidi à une température inférieure à un point de fusion du matériau de changement de phase.

9. Procédé selon la revendication 1, dans lequel la compression isostatique comprend (a) l'accumulation d'une pression cible entre 140 et 200 Mégapascals en 10 minutes et (b) la décompression en 30 minutes.

10. Procédé selon la revendication 1, comprenant en outre la finition du corps façonné par une technique choisie dans le groupe constitué par le sciage, le fraisage et le perçage.

11. Corps de stockage de chaleur latente produit par un procédé selon une ou plusieurs des revendications 1 à 10, le corps de stockage de chaleur latente comprenant :
un mélange d'un matériau à changement de phase et d'un matériau de graphite expansé dans lequel le facteur d'anisotropie obtenu à partir du rapport entre la conductivité thermique dans le plan et à travers le plan est inférieur ou égal à 3,5.

12. Corps de stockage de chaleur latente selon la revendication 11, dans lequel le matériau de graphite expansé comprend des particules de graphite expansées avec une densité apparente comprise entre 2 et 200 grammes par litre ou des particules préparées par découpe d'une bande de type feuille plane obtenue par compression de particules de graphite expansées en fragments ayant un diamètre moyen compris entre 5 microns et 20 millimètres ou une combinaison des deux sortes de particules.

13. Corps de stockage de chaleur latente selon la revendication 11, dans lequel un matériau de graphite non expansé est ajouté au matériau de graphite expansé de manière à ce que la fraction en poids du matériau de graphite non expansé dans le matériau de graphite soit inférieure ou égale à 70 %.

14. Corps de stockage de chaleur latente selon la revendication 11, dans lequel le matériau à changement de phase est l'un du groupe comprenant les paraffines, les polyols, les polymères, de l'eau, les acides organiques et leurs mélanges, les solutions aqueuses de sels, les hydrates de sels, les mélanges d'hydrates de sels, les sels inorganiques et organiques et les mélanges eutectiques de sels, les hydrates de clathrates et les hydroxydes de métaux alcalins.

15. Corps de stockage de chaleur latente selon la revendication 11, dans lequel une fraction volumique du matériau de graphite expansé dans le corps de stockage de chaleur latente est d'au moins 2 %.

16. Corps de stockage de chaleur latente selon la revendication 13, dans lequel une fraction volumique du matériau de graphite expansé dans le corps de stockage de chaleur latente comprenant un mélange du matériau de graphite expansé, les particules de graphite non expansées et le matériau à changement de phase est d'au moins 2 %.
